(19) **Europäisches Patentamt**
**European Patent Office**
**Office européen des brevets**

(11) **EP 4 675 127 A1**

(12) **EUROPÄISCHE PATENTANMELDUNG**

(43) Veröffentlichungstag:
**07.01.2026 Patentblatt 2026/02**

(21) Anmeldenummer: **25186626.5**

(22) Anmeldetag: **01.07.2025**

(51) Internationale Patentklassifikation (IPC):
**F16G 1/10** (2006.01) **F16G 1/28** (2006.01)
**F16G 5/08** (2006.01) **F16G 5/20** (2006.01)

(52) Gemeinsame Patentklassifikation (CPC):
**F16G 1/28; F16G 1/10; F16G 5/08; F16G 5/20**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **01.07.2024 DE 102024206157**

(71) Anmelder: **ContiTech Deutschland GmbH**
**30175 Hannover (DE)**

(72) Erfinder:
- **Michalk, Jan**
**30175 Hannover (DE)**
- **Bartsch-Kuszewski, Dirk**
**30175 Hannover (DE)**

(74) Vertreter: **Preusser, Andrea**
**ContiTech Deutschland GmbH**
**Intellectual Property**
**Philipsbornstraße 1**
**30165 Hannover (DE)**

(54) **ANTRIEBSRIEMEN**

(57) Die Erfindung betrifft einen Antriebsriemen 1 mit einer sich in Querrichtung Y erstreckenden Breite b, aufweisend einen Grundkörper 2, wobei innerhalb des Grundkörpers 2 in einer Längsrichtung X eine Mehrzahl von Festigkeitsträgern 4 angeordnet und von dem Grundkörper 2 umschlossen sind. Eine Höhendifferenz $\Delta h$ in Querrichtung Y beträgt maximal 0,2 % der Breite b.

**Fig. 1**

EP 4 675 127 A1

**Beschreibung**

Die Erfindung betrifft einen Antriebsriemen mit einer sich in Querrichtung erstreckenden Breite, aufweisend einen Grundkörper, wobei innerhalb des Grundkörpers in einer Längsrichtung eine Mehrzahl von Festigkeitsträgern angeordnet und von dem Grundkörper umschlossen sind.

In der Antriebstechnik werden auf verschiedenen technischen Gebieten Antriebsriemen zur Übertragung von Drehmomenten und Drehbewegungen über einen Achsabstand zwischen wenigstens zwei Riemenscheiben verwendet. Hierzu kann der Antriebsriemen als flexibles, endlos geschlossenes Band ausgebildet sein. Dabei umschlingt der Antriebsriemen über einen Teilumfang bzw. über einen Umschlingungswinkel jeweils eine Antriebsscheibe oder -rolle und mindestens eine Abtriebsscheibe oder -rolle und überträgt dort die Kräfte durch Reibung und bzw. oder durch Formschluss. Der Antriebsriemen weist wenigstens eine profilierte Seite auf, welche je nach Anwendungsfall quer zur Bewegungsrichtung z.B. als Zähne oder in der Bewegungsrichtung z.B. als Keile bzw. als Keilrippen oder als eine Kombination daraus ausgebildet sein kann. Derartige Antriebsriemen werden üblicherweise aus einem flexiblen polymeren Material wie z.B. aus einem Elastomer oder aus Polyurethan (PU) als Riemenkörper hergestellt. In Richtung der Kraftübertragung, d.h. in der Bewegungsrichtung, sind Zugträger wie z.B. Stahlseile oder textile Zugträger in den Riemenkörper eingebettet. Um das Material des Riemenkörpers vor Abrieb zu schützen, ist es bekannt, wenigstens die profilierte Seite des Riemens mit einer Beschichtung zu versehen. Hierdurch kann z.B. ein Gewebe verwendet werden, welches flächig auf der korrespondierenden Seite des Riemenkörpers aufgebracht wird. Als Antriebsriemen sind verschiedene Ausführungsformen von Zahnriemen, Flachriemen, Keilriemen, Keilrippenriemen oder einer Kombination daraus bekannt.

Aus der DE 2126858 A1 ist ein Antriebsriemen bzw. Hybridriemen mit zwei gegenüberliegenden Antriebsseiten bekannt, wobei eine erste Antriebsseite als Zahnriemen zur formschlüssigen Leistungsübertragung und eine zweite Antriebsseite, die der ersten Antriebsseite gegenüberliegt, zur kraftschlüssigen Leistungsübertragung als Keilrippenriemen ausgebildet ist. Die Rippen des Antriebsriemens sind durch ein Schleifverfahren hergestellt. Zur Beeinflussung des Reibbeiwerts der Rippenoberfläche weist das Elastomermaterial des Antriebsriemens Fasern auf, die in Folge des Materialabtrags durch Schleifen zumindest teilweise die Oberfläche der Rippen bilden.

Nachteiliger Weise weisen die bekannten Hybridriemen einen erhöhten Verschleiß auf, da insbesondere eine zu große Höhendifferenz in Querrichtung des Hybridriemens zu Lateralkräften und lokal ungleichmäßiger Belastung des Antriebsriemens führt. Dies kann außerdem zu einer Verringerten Leistungsübertragungsfähigkeit führen.

Der Erfindung liegt die Aufgabe zugrunde, einen Antriebsriemen bereitzustellen, wobei die Leistungsübertragungsfähigkeit gesteigert und bzw. oder der Verschleiß verringert werden kann.

Die Lösung dieser Aufgabe ergibt sich durch einen Antriebsriemen mit den Merkmalen des unabhängigen Anspruchs 1. Eine weitere Lösung ergibt sich durch ein Antriebssystem mit einem erfindungsgemäßen Antriebsriemen nach Anspruch 10. Weitere vorteilhafte Ausbildungen sind den abhängigen Ansprüchen, der allgemeinen Beschreibung sowie den Ausführungsbeispielen zu entnehmen.

Die vorliegende Anmeldung betrifft einen Antriebsriemen mit einer sich in Querrichtung erstreckenden Breite, aufweisend einen Grundkörper, wobei innerhalb des Grundkörpers in einer Längsrichtung eine Mehrzahl von Festigkeitsträgern angeordnet und von dem Grundkörper umschlossen sind. Erfindungsgemäß beträgt eine Höhendifferenz Δh des Antriebsriemens in Querrichtung maximal 0,2 % der Breite b.

$$\Delta h \leq 0,002 \times b$$

Die Höhendifferenz Δh ermittelt sich aus der Differenz einer linken Höhe "Hl" und einer rechten Höhe "Hr", berechnet nach folgender Formel:

$$\Delta h = Hl - Hr$$

Der Antriebsriemen kann in unterschiedlichen bekannten Ausführungsformen als Zahnriemen oder Keilrippenriemen oder Keilriemen oder einer Kombination daraus ausgebildet sein. Die vergleichsweise geringe Höhendifferenz Δh des Antriebsriemens in Querrichtung von maximal 0,2 % der Breite sorgt für eine gleichmäßige Kraft- bzw. Spannungsverteilung über den Querschnitt des Antriebsriemens. Hierdurch können auf vorteilhafte Weise lokale Spannungsspitzen und somit eine stellenweise Überlastung des Antriebsriemens vermieden werden, was insgesamt zu einer größeren Leistungsübertragungsfähigkeit führen kann und bzw. oder die Lebensdauer des Antriebsriemens verlängern kann.

Gemäß einem weiteren Aspekt der vorliegenden Erfindung weist der Antriebsriemen eine radial innenliegende erste Antriebsseite und eine radial außenliegende zweite Antriebsseite auf, wobei die erste Antriebsseite und bzw. oder die zweite Antriebsseite in Längsrichtung erstreckende und in Querrichtung voneinander beabstandete Rippen oder in Querrichtung erstreckende und in Längsrichtung voneinander beabstandete Zähne aufweist.

Mit anderen Worten kann der erfindungsgemäße Antriebsriemen zur beidseitigen Leistungsübertragung ausgebildet sein, wobei gemäß eines ersten Ausführungsbeispiels sowohl die erste Antriebsseite als auch die zweite Antriebsseite des Antriebsriemens ein Keilrippenriemenprofil zur reibschlüssigen Kraftübertragung in Form von in Querrichtung voneinander beabstandeter Rippen aufweist. Auf vorteilhafte Weise können durch die reibschlüssige Kraftübertragung ungleichförmige, stoßartige Belastungen durch einen zulässigen Schlupf des Antriebsriemens ausgeglichen werden.

Gemäß eines zweiten Ausführungsbeispiels kann sowohl die erste Antriebsseite als auch die zweite Antriebsseite des Antriebsriemens in Querrichtung erstreckende und in Längsrichtung voneinander beabstandete Zähne aufweisen. Die erste und die zweite Antriebsseite sind als ein Zahnriemen zur formschlüssigen Kraftübertragung ausgebildet. Auf vorteilhafte Weise können durch die formschlüssige Kraftübertragung besonders hohe Kräfte übertragen werden. Durch Vermeidung von Schlupf kann der Gesamtwirkungsgrad des Antriebssystems besonders hoch ausfallen.

Gemäß eines dritten Ausführungsbeispiels kann die erste Antriebsseite des Antriebsriemens ein Keilrippenriemenprofil zur reibschlüssigen Kraftübertragung aufweisen. Die zweite Antriebsseite kann als Zahnriemen zur formschlüssigen Kraftübertragung ausgebildet sein.

Gemäß eines vierten Ausführungsbeispiels kann die erste Antriebsseite des Antriebsriemens als Zahnriemen zur formschlüssigen Kraftübertragung ausgebildet sein. Die zweite Antriebsseite kann ein Keilrippenriemenprofil zur reibschlüssigen Kraftübertragung aufweisen.

Gemäß einem weiteren Aspekt der vorliegenden Erfindung ist der Antriebsriemen frei von Copolymeren aus Tetrafluoroethylen. Dadurch ist der Antriebsriemen besonders umweltfreundlich.

Gemäß einem weiteren Aspekt der vorliegenden Erfindung umfasst der Grundkörper ein elastomeres Material und weist mindestens zwei Schichten auf, wobei mindestens eine der Schichten ein Polyamidgewebe umfasst.

Vorzugsweise bildet die Polyamidgewebeschicht die oberste Schicht auf der radial innenliegenden ersten Antriebsseite und bzw. oder auf der radial außenliegenden zweiten Antriebsseite aus. Die Polyamidgewebeschicht kann zum Schutz des Grundkörpers vor Verschleiß und bzw. oder zur Verringerung des Reibbeiwerts ausgebildet sein, und in Folge dessen zur Verbesserung des Wirkungsgrads beitragen. Die Polyamidgewebeschicht kann mit einer elastomeren Zusammensetzung getränkt sein, wodurch zum Beispiel die Haftung der Polyamidgewebeschicht an dem Grundkörper verbessert werden kann.

Gemäß einem weiteren Aspekt der vorliegenden Erfindung umfasst das elastomere Material Mikrofasern. Auf vorteilhafte Weise kann nach der Herstellung bzw. der Vulkanisation des Antriebsriemens nachträglich eine Profilierung, z.B. in Form eines Keilrippenriemenprofils, in den Grundkörper des Antriebsriemens durch Schleifen eingebracht werden. Die Fasern werden durch das Schleifen zumindest teilweise freigelegt, sodass die Fasern aus der Elastomermatrix herausragen und einen Teil der Oberfläche der ersten und bzw. oder zweiten Antriebsseite bilden. Durch die Fasern kann der Reibbeiwert der ersten und bzw. oder zweiten Antriebsseite erhöht werden, sodass die Leistungsübertragungsfähigkeit gesteigert werden kann. Auf vorteilhafte Weise kann das Profil des Antriebsriemens auch ohne den Einsatz teurer Formwerkzeuge nachträglich durch mechanische Bearbeitung erzeugt werden.

Gemäß einem weiteren Aspekt der vorliegenden Erfindung umfassen die Mirkofasern Aramidfasern. Vorzugsweise sind die Mikrofasern vollständig durch Aramidfasern gebildet. Der Reibbeiwert kann durch die Verwendung von Aramidfasern besonders vorteilhaft beeinflusst werden. Zusätzlich wird dem Antriebsriemen durch die Aramidfasern eine zusätzliche Steifigkeit verliehen, wodurch die Leisungsübertragungsfähigkeit erhöht werden kann.

Gemäß einem weiteren Aspekt der vorliegenden Erfindung ist der Festigkeitsträger als Cord ausgebildet. Zur Vermeidung der Drall- oder Ablaufneigung des gesamten Antriebsriemens können die Litzen der im Antriebsriemen nebeneinander liegenden Corde abwechselnd oder gruppenweise abwechselnd im S-Schlag und im Z-Schlag umeinandergedreht sein. Vorzugsweise umfasst der Cord Aramid, Glas, Carbon oder eine Kombination daraus.

Die vorliegende Erfindung betrifft außerdem ein Antriebssystem mit wenigstens einer motorisch angetriebenen Antriebsscheibe, einer Abtriebsscheibe und einem erfindungsgemäßen Antriebsriemen. Die zuvor genannten Eigenschaften und Vorteile des Antriebsriemens lassen sich vorteilhaft in einem Antriebssystem nutzen und hierauf übertragen.

Anhand der folgenden Figuren wird ein Ausführungsbeispiel der Erfindung schematisch dargestellt und näher erläutert.

Fig. 1 zeigt eine schematische Darstellung eines Abschnitts eines erfindungsgemäßen Antriebsriemens in perspektivischer Darstellung.
Fig. 2 zeigt eine schematische Schnittdarstellung eines erfindungsgemäßen Antriebsriemens.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

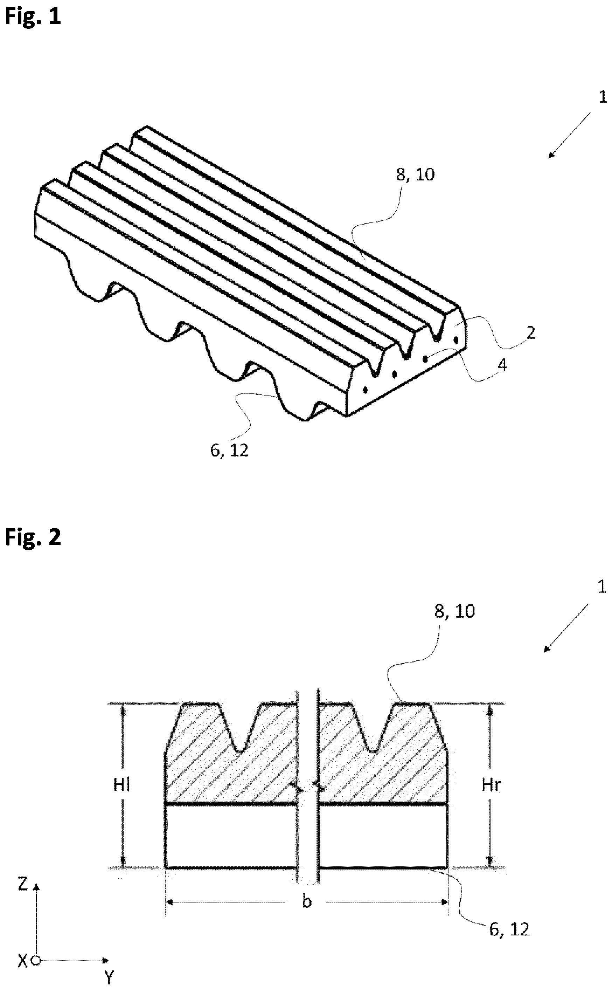

Der in Figur 1 dargestellte Antriebsriemen 1 weist eine radial innenliegende erste Antriebsseite 6 und eine radial außenliegende zweite Antriebsseite 8 auf, wobei die die zweite Antriebsseite 8 in Längsrichtung X erstreckende und in Querrichtung Y voneinander beabstandete Rippen 10 und die erste Antriebsseite 6 sich in Querrichtung Y erstreckende und in Längsrichtung X voneinander beabstandete Zähne 12 aufweist. Der dargestellte Antriebsriemen 1 des Ausführungsbeispiels der Figur 1 ist zur Leistungsübertragung über die erste Antriebsseite 6 und die zweite Antriebsseite 8 ausgebildet. Die erste Antriebsseite 6 des Antriebsriemens 1 ist als Zahnriemen zur formschlüssigen Kraftübertragung ausgebildet. Die zweite Antriebsseite 8 weist Keilrippenriemenprofil zur reibschlüssigen Kraftübertragung auf. Ein Grundkörper 2 ist aus einer mit Aramidfasern gefüllten Elastomerzusammensetzung ausgebildet. Die Aramidfasern ragen auf der Oberfläche der zweiten Antriebsseite 8 aus der Elastomermatrix heraus und bilden einen Teil der Oberfläche der zweiten Antriebsseite 8. Innerhalb des Grundkörpers 2 sind in Längsrichtung X eine Mehrzahl von Festigkeitsträgern 4 angeordnet und von dem der Elastomerzusammensetzung des Grundkörpers 2 umschlossen. Festigkeitsträger 4 sind als Cord aus Aramid ausgebildet.

Figur 2 zeigt eine schematische Schnittdarstellung des erfindungsgemäßen Antriebsriemens 1. Eine Höhendifferenz $\Delta h$ ermittelt sich aus der Differenz einer linken Höhe Hl und einer rechten Höhe Hr. Die linke Höhe Hl und die rechte Höhe Hl wird von der Oberkante der Rippe 10 der zweiten Antriebsseite 8 und der Unterkante eines Zahns 12 der ersten Antriebsseite 6 gemessen. Die Höhendifferenz $\Delta h$ des Antriebsriemens 1 beträgt in Querrichtung Y maximal 0,2 % der Breite b.

**Bezugszeichenliste (Teil der Beschreibung)**

| | |
|---|---|
| 1 | Antriebsriemen |
| 2 | Grundkörper |
| 4 | Festigkeitsträger |
| 6 | erste Antriebsseite |
| 8 | zweite Antriebsseite |
| 10 | Rippe |
| 12 | Zahn |

| | |
|---|---|
| b | Breite |
| Hl | linke Höhe |
| Hr | rechte Höhe |
| $\Delta h$ | Höhendifferenz |

| | |
|---|---|
| X | Längsrichtung; Tiefe |
| Y | Querrichtung; Breite |
| Z | vertikale Richtung; Höhe |
| X, Y | Horizontalen; horizontale Ebene |

**Patentansprüche**

1. Antriebsriemen (1) mit einer sich in Querrichtung (Y) erstreckenden Breite (b), aufweisend einen Grundkörper (2), wobei innerhalb des Grundkörpers (2) in einer Längsrichtung (X) eine Mehrzahl von Festigkeitsträgern (4) angeordnet und von dem Grundkörper (2) umschlossen sind,
**dadurch gekennzeichnet, dass**
eine Höhendifferenz ($\Delta h$) in Querrichtung (Y) maximal 0,2 % der Breite (b) beträgt.

2. Antriebsriemen (1) nach Anspruch 1,
**dadurch gekennzeichnet, dass**
der Antriebsriemen (1) eine radial innenliegende erste Antriebsseite (6) und eine radial außenliegende zweite Antriebsseite (8) aufweist, wobei die erste Antriebsseite (6) und/oder die zweite Antriebsseite (8) in Längsrichtung (X) erstreckende und in Querrichtung (Y) voneinander beabstandete Rippen (10) oder in Querrichtung (Y) erstreckende und in Längsrichtung (X) voneinander beabstandete Zähne (12) aufweist.

3. Antriebsriemen (1) nach einem der Ansprüche 1 oder 2,
**dadurch gekennzeichnet, dass**
der Antriebsriemen (1) frei von Copolymeren aus Tetrafluoroethylen ist.

4. Antriebsriemen (1) nach einem der Ansprüche 1 bis 3,
**dadurch gekennzeichnet, dass**
der Grundkörper (2) ein elastomeres Material umfasst und mindestens zwei Schichten aufweist, wobei mindestens eine der Schichten ein Polyamidgewebe umfasst.

5. Antriebsriemen (1) nach Anspruch 4,
**dadurch gekennzeichnet, dass**
die Polyamidgewebeschicht die oberste Schicht auf der radial innenliegenden ersten Antriebsseite (6) und/oder auf der radial außenliegenden zweiten Antriebsseite (8) ausbildet.

6. Antriebsriemen (1) nach einem der Ansprüche 4 oder 5,
**dadurch gekennzeichnet, dass**
das elastomere Material Mikrofasern umfasst.

7. Antriebsriemen (1) nach Anspruch 6,
**dadurch gekennzeichnet, dass**
die Mikrofasern Aramidfasern umfassen.

8. Antriebsriemen (1) nach einem der Ansprüche 1 bis 7,
**dadurch gekennzeichnet, dass**
der Festigkeitsträger (4) als Cord ausgebildet ist.

**9.** Antriebsriemen (1) nach Anspruch 8,
**dadurch gekennzeichnet, dass**
der Cord Aramid, Glas, Carbon oder eine Kombination daraus umfasst.

**10.** Antriebssystem mit wenigstens einer motorisch angetriebenen Antriebsscheibe, einer Abtriebsscheibe und einem Antriebsriemen (1) nach einem der Ansprüche 1 bis 9.

**Fig. 1**

**Fig. 2**

Europäisches
Patentamt

European
Patent Office

Office européen
des brevets

# EUROPÄISCHER RECHERCHENBERICHT

Nummer der Anmeldung

EP 25 18 6626

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 21 26 858 A1 (GOODYEAR TIRE & RUBBER [US]) 16. Dezember 1971 (1971-12-16) * Seite 8, Absatz 1; Abbildungen 1-4 * * Seite 9, Absatz 2 * ----- | 1-10 | INV. F16G1/10 F16G1/28 F16G5/08 F16G5/20 |
| X | EP 0 280 175 A2 (NITTA KK [JP]) 31. August 1988 (1988-08-31) * Abbildung 12 * ----- | 1-3,10 | |

RECHERCHIERTE SACHGEBIETE (IPC)

F16G

Der vorliegende Recherchenbericht wurde für alle Patentansprüche erstellt

| Recherchenort | Abschlußdatum der Recherche | Prüfer |
|---|---|---|
| Den Haag | 16. Oktober 2025 | Lantsheer, Martijn |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 18 6626

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2025

| Im Recherchenbericht angeführtes Patentdokument | Datum der Veröffentlichung | Mitglied(er) der Patentfamilie | Datum der Veröffentlichung |
|---|---|---|---|
| DE 2126858 A1 | 16-12-1971 | CA 940741 A | 29-01-1974 |
| | | DE 2126858 A1 | 16-12-1971 |
| | | FR 2096009 A5 | 11-02-1972 |
| | | GB 1316903 A | 16-05-1973 |
| | | JP S5828459 B1 | 16-06-1983 |
| | | NL 7107262 A | 10-12-1971 |
| | | SE 372805 B | 13-01-1975 |
| | | US 3643518 A | 22-02-1972 |
| | | ZA 712846 B | 26-01-1972 |
| EP 0280175 A2 | 31-08-1988 | DE 3880710 T2 | 02-12-1993 |
| | | EP 0280175 A2 | 31-08-1988 |
| | | US 5066344 A | 19-11-1991 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2126858 A1